# EUROPEAN PATENT APPLICATION

(11) **EP 3 842 130 A1**
(43) Date of publication of application: **30.06.2021**
(21) Application number: 19851638.7
(22) Date of filing: 23.05.2019
(51) Int. Cl.: B01D 61/46, B01D 69/02, C01B 32/159, C01B 32/168, C02F 1/44, C02F 1/469, G21F 9/06

(54) **WATER TREATMENT DEVICE AND ION CONCENTRATION ADJUSTED WATER MANUFACTURING METHOD**

(30) Priority: 23.08.2018 JP 2018156725
(71) Applicant: Kotobuki Holdings Co., Ltd., Kitakyushu-shi, Fukuoka 802-0836 (JP)
(72) Inventor: TAKAGI Toshio, Kitakyushu-shi, Fukuoka 802-0042 (JP); SHIMIZU Yasushi, Kitakyushu-shi, Fukuoka 802-0836 (JP); MURATA Katsuyuki, Kitakyushu-shi, Fukuoka 802-0836 (JP); TANIGAKI Naoto, Kitakyushu-shi, Fukuoka 802-0836 (JP)
(74) Representative: Parker, Andrew James
(86) International application number: PCT/JP2019/020501
(87) International publication number: WO 2020/039676

(57) **Abstract**

The present disclosure describes a water treatment device and a method of manufacturing an ion-concentration-adjusted water in which an ion concentration of water can be adjusted at a low cost by a simple method. The water treatment device includes a tubular member configured to allow water to flow between an inlet on one end side and an outlet on the other end side, and a filter member disposed in the tubular member between the inlet and the outlet. The filter member includes a conductive filter having permeable holes through which water can flow, a pair of electrodes configured to apply a voltage to the conductive filter, and an insulator disposed between the pair of electrodes and configured to insulate between the pair of electrodes.

## Description

### Technical Field

The present disclosure relates to a water treatment device and a method of manufacturing an ion-concentration-adjusted water.

### Background Art

Drinking water and other water for daily life can be broken down into hard water having a high content of calcium ions, magnesium ions or the like, and soft water having a low content of them. According to WHO standards, water having a hardness (total hardness) of 60 mg/l or less is soft water, water having a hardness (total hardness) of 60 mg/l to 120 mg/l is moderately hard water, water having a hardness (total hardness) of 120 mg/l to 180 mg/l is hard water, and water having a hardness (total hardness) of 180 mg/l or more is very hard water. In Japan, generally, water having a hardness (total hardness) of 100 mg/l or less is soft water, water having a hardness (total hardness) of 100 mg/l to 300 mg/l is moderately hard water, and water having a hardness (total hardness) of 300 mg/l or more is hard water. In the present specification, water having a hardness (total hardness) of 100 mg/l or more is referred to as hard water.

When hard water is used as clean water, salts dissolved in the hard water may be precipitated and form deposited materials (scale) on a pipe or the like. In this case, the scale adheres to the pipe or the like and a flow path thereof becomes narrow, and thereby a flow rate may decrease. Particularly, in a device having a thin pipe (for example, a heat exchanger, a warm water washing toilet seat, or the like), clogging of the pipe due to the scale is likely to occur, and this may cause a failure. Therefore, removing ions from hard water using an RO membrane or the like can be considered (see, for example, Patent Literatures 1 to 3).

### Citation List

### Patent Literature

Patent Literature 1: Japanese Unexamined Patent Publication No. H9-141261
Patent Literature 2: Japanese Unexamined Patent Publication No. 2005-185985
Patent Literature 3: Japanese Unexamined Patent Publication No. 2007-245003

### Summary of Invention

### Technical Problem

However, when hard water containing a large amount of metal ions is treated, a large amount of energy is required for reverse osmosis, and thus energy costs may increase. Also, since a load is exerted on the RO membrane by the reverse osmosis treatment, a service life of the RO membrane may be shortened, and costs for replacing the RO membrane may increase.

Therefore, the present disclosure describes a water treatment device and a method of manufacturing an ion-concentration-adjusted water in which an ion concentration of water can be adjusted at a low cost by a simple method.

### Solution to Problem

A water treatment device according to one aspect of the present disclosure includes a tubular member configured to allow water to flow between an inlet on one end side and an outlet on the other end side, and a filter member disposed in the tubular member between the inlet and the outlet. The filter member includes a conductive filter having permeable holes through which water is able to flow, a pair of electrodes configured to apply a voltage to the conductive filter, and an insulator disposed between the pair of electrodes and configured to insulate between the pair of electrodes.

A method of manufacturing an ion-concentration-adjusted water according to another aspect of the present disclosure is an ion-concentration-adjusted water manufacturing method by using a water treatment device which includes a tubular member configured to allow water to flow between an inlet on one end side and an outlet on the other end side, and a filter member disposed in the tubular member between the inlet and the outlet, in which the filter member includes a conductive filter having permeable holes through which water is able to flow, a pair of electrodes, and an insulator disposed between the pair of electrodes and configured to insulate between the pair of electrodes. The method includes applying a voltage to the conductive filter with the pair of electrodes, and supplying water to the filter member by causing the water to flow from the inlet to the outlet with the voltage applied to the conductive filter.

### Advantageous Effects of Invention

According to the water treatment device and the method of manufacturing an ion-concentration-adjusted water according to the present disclosure, an ion concentration of water can be adjusted at a low cost using a simple method.

### Brief Description of Drawings

FIG. 1 is a schematic view illustrating an example of a water treatment device.
FIG. 2 is a schematic view illustrating another example of the water treatment device.
FIG. 3 is a schematic view illustrating yet another example of the water treatment device.
FIG. 4 is a schematic view illustrating another example of a filter member.

### Description of Embodiments

Hereinafter, an example of an embodiment according to the present disclosure will be described in more detail with reference to the drawings. In the following description, the same elements or elements having the same function will be denoted by the same reference signs and duplicate descriptions thereof will be omitted.

### Water treatment device

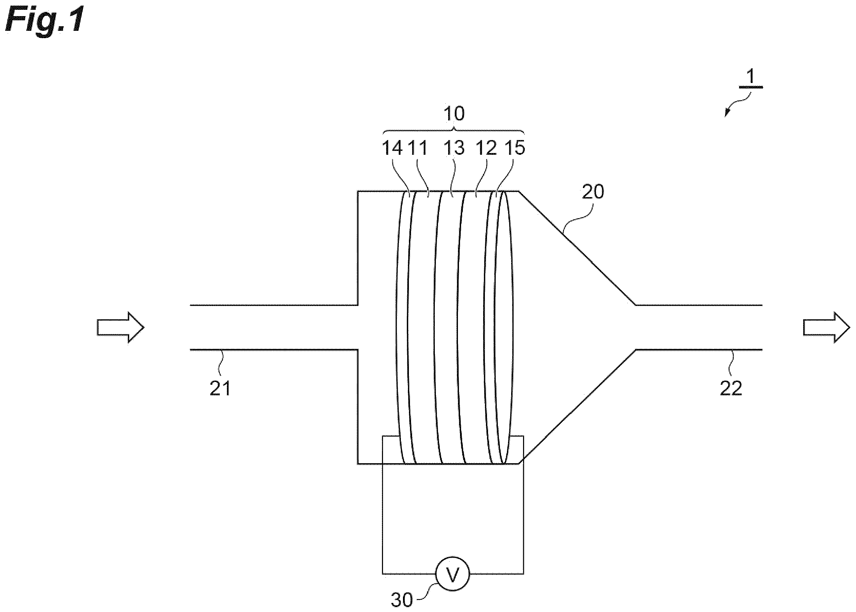

First, a water treatment device 1 will be described with reference to FIG. 1. The water treatment device 1 is configured to remove, for example, hardness components and foreign substances from water. The water treatment device 1 includes a filter member 10, a holder 20 (tubular member), and a power supply 30.

The filter member 10 includes a pair of conductive filters 11 and 12, an insulator 13, and a pair of electrodes 14 and 15.

The conductive filters 11 and 12 may be, for example, a carbon filter, a transparent conductive film (ITO: indium tin oxide) having a porous structure, a metal film such as a platinum thin film having nano-through holes, or a filter made of other materials. The carbon filter may be formed of nanocarbon (for example, graphene, carbon nanotubes, carbon nanoribbons, carbon nanohoms, graphene oxide, diamond-like carbon, or the like). The carbon filter may be formed of a carbonized thin film of a carbon precursor (for example, an acrylic resin or the like). The carbon filter may be formed of carbon particles having conductivity (for example, acetylene black, conductive carbon black, or the like) if permeable holes having a substantially uniform size can be formed. As the conductive carbon black, for example, "VULCAN XC-72" manufactured by Cabot Corporation may be exemplified.

The conductive filters 11 and 12 may have a film shape. When the carbon filter is formed as the conductive filters 11 and 12, for example, ink or slurry of carbon nanotubes may be mixed with a dispersant, a binder, conductive particles (Nafion, ionic liquid, or the like), a thickener, or the like as necessary.

Fine permeable holes for allowing water to permeate to a downstream side are provided in the conductive filters 11 and 12. Diameters of the permeable holes may be set to about 10 µm or less. The permeable holes may be formed in a film such as graphene using high temperature oxidation or other chemical methods. When the conductive filters 11 and 12 are formed by a film formed by aggregating carbon nanotubes, carbon nanohoms, or the like, gaps between the carbon nanotubes or carbon nanohorns may be utilized as the permeable holes.

The insulator 13 is positioned between the pair of conductive filters 11 and 12 and is configured to insulate the conductive filter 11 and the conductive filter 12. However, the insulator 13 may not completely insulate between the pair of conductive filters 11 and 12. That is, a slight current may flow between the pair of conductive filters 11 and 12.

As illustrated in FIG. 1, the insulator 13 may be sandwiched by the pair of conductive filters 11 and 12. In order to uniformly and efficiently apply a voltage to the conductive filters 11 and 12, the insulator 13 may have a flat thin film shape. Fine permeable holes for allowing water to permeate to a downstream side are provided in the insulator 13. Diameters of the permeable holes may be set to several micrometers or less.

The pair of electrodes 14 and 15 have high conductivity and are configured to apply a voltage to the pair of conductive filters 11 and 12. In the example illustrated in FIG. 1, the electrode 14 is in contact with an outer surface of the conductive filter 11, and the electrode 15 is in contact with an outer surface of the conductive filter 12 (another conductive filter). That is, the pair of electrodes 14 and 15 sandwich the conductive filters 11 and 12 and the insulator 13 so that the conductive filters 11 and 12 and the insulator 13 are positioned between the pair of electrodes 14 and 15.

One of the pair of electrodes 14 and 15 functions as a working electrode, and the other of the pair of electrodes 14 and 15 functions as a counter electrode. The pair of electrodes 14 and 15 may be formed of, for example, platinum, or may be formed of, for example, a metal such as copper whose surface has been plated with platinum. When the electrodes 14 and 15 are used in a liquid, the electrodes 14 and 15 may have corrosion resistance.

The holder 20 has a cylindrical shape and is configured to hold the filter member 10 inside. The holder 20 may include, for example, an inlet 21 into which water containing hardness components is introduced, and an outlet 22 from which treated water (hardness-adjusted water) after the water containing hardness components has been treated by the filter member 10 is discharged. In the example illustrated in FIG. 1, the electrode 14 (working electrode) is disposed on an upstream side, and the electrode 15 (counter electrode) is disposed on a downstream side.

The power supply 30 is connected to the electrodes 14 and 15 and is configured to apply a positive or negative voltage to the conductive filters 11 and 12 via the electrodes 14 and 15.

### Method of manufacturing ion-concentration-adjusted water (method of adjusting ion concentration)

Next, a method of manufacturing an ion-concentration-adjusted water by using the water treatment device 1 and a method of adjusting an ion concentration of water by using the water treatment device 1 will be described.

First, the water treatment device 1 is prepared. Next, the power supply 30 is controlled to apply a voltage of about 0.1 V to 10 V to the electrodes 14 and 15 and the conductive filters 11 and 12 so that the electrode 14 and the conductive filter 11 on the upstream side serve as a cathode and the electrode 15 and the conductive filter 12 on the downstream side serve as an anode. Thereby, the permeable holes themselves of the conductive filter 11 placed in an electric field function as holes having an electrostatic attractive force on cations and function as holes having a repulsive force against anions.

In this state, an ionic solution (water) is supplied to the holder 20 from the inlet 21 to the filter member 10. Then, metal cations are attracted to the electrode 14 and the permeable holes in the conductive filter 11 and do not easily permeate through the conductive filter 11, and anions permeate through the conductive filters 11 and 12 and the insulator 13 without reacting with the permeable holes in the conductive filter 11. Thereby, the ionic solution is separated into a high-concentration cation-containing solution on the upstream side of the conductive filter 11 and a low-concentration cation-containing solution on the downstream side of the conductive filter 11. Therefore, in a state in which a voltage is applied to the electrodes 14 and 15 and the conductive filters 11 and 12, when an ionic solution (water) is supplied to the water treatment device 1, a low-concentration cation-containing solution is discharged from the outlet 22. Thereafter, when application of the voltage to the electrodes 14 and 15 and the conductive filters 11 and 12 is stopped, a high-concentration cation-containing solution remaining in the holder 20 (on the upstream side of the conductive filter 11) is discharged from the outlet 22. Further, as the voltage applied to the electrode 14 becomes higher, a difference in concentration between the high-concentration cation-containing solution on the upstream side and the low-concentration cation-containing solution on the downstream side tends to become larger.

Therefore, when the water treatment device 1 is provided in a tap water pipe or the like, unnecessary ions or the like (for example, metal ions such as calcium ions or magnesium ions serving as hardness components) can be separated and removed from water. Specifically, on the downstream side of the conductive filter 11, hardness components are removed from the water containing the hardness components and water with a reduced hardness (for example, soft water) is generated. On the other hand, on the upstream side of the conductive filter 11, hardness components are concentrated and water with an increased hardness (for example, hard water) is generated. That is, the water treatment device 1 can be used as a soft water generator and/or a hard water generator.

When the water treatment device 1 is used as the soft water generator, hard water can be softened in a region in which hard water flows out. Soft water has such an advantage that, for example, detergent foams well, dirt is easily extracted, and soup stock is easily made, making it suitable for cooking Japanese food.

On the other hand, when the water treatment device 1 is used as the hard water generator, soft water can be easily hardened and used even in a region in which hard water does not flow out. Particularly, since an ion concentration can be changed by appropriately adjusting the voltage applied to the electrode 14, hard water having a required hardness can be easily manufactured.

A general advantage of the hard water is such that, for example, an object to be cooked becoming mushy does not easily occur, and an odor or unpleasant taste of meat are not easily caused. Hard water having a relatively high hardness has such an advantage that, for example, it is suitable for brewing because microorganisms are activated so that fermentation easily proceeds and an effect of relieving constipation is expected when it is used as drinking water. Since a flavor of coffee or tea changes according to the hardness, hard water with hardness of various types may be used according to tastes when coffee or tea is extracted. Since a taste or a flavor of liquor changes according to a hardness of water used to be mixed with alcoholic beverages such as whiskey, shochu (distilled spirits), or the like, hard water with hardness of various types may be used as water to be mixed with alcoholic beverages according to tastes.

Also, when water in which radioactive cesium or radioactive strontium is dissolved is treated by the water treatment device 1, the radioactive cesium or the radioactive strontium can be removed from the water. Specifically, on the upstream side of the conductive filter 11, since cations (radioactive cesium and radioactive strontium) in the water are attracted to the electrode 14 (cathode) and do not easily permeate through the conductive filter 11, water containing almost no radioactive substances permeates through the conductive filters 11 and 12 and the insulator 13 and is retrieved. Thereafter, when application of the voltage to the electrode 14 is stopped, since concentrated water of the radioactive substances accumulated near the electrode 14 (cathode) passes through the conductive filters 11 and 12, the radioactive substances can be concentrated and discarded. Since the radioactive substances all pass through the filter member 10 to be discarded and are not accumulated in the filter member 10, the radioactive substances can be removed in a continuous operation by the water treatment device 1.

### Operation

Incidentally, metal ions could not be removed from water in a conventional water purification technology in which impurities are adsorbed on an activated carbon purifying material. Also, in a conventional water softener using ion exchange resins, since ion exchange thereof caused sodium ions to elute instead of removing metal ions from hard water, it could not be used for applications that require water from which sodium ions were removed.

According to the above-described example, since an attractive force or a repulsive force (electrostatic force) acts on ions due to electric charges, an ion concentration in water can be adjusted extremely easily. Moreover, since sizes of the permeable holes in the conductive filters 11 and 12 and the insulator 13 are generally much larger than those of hydrates of metal ions, costs for replacing a RO membrane or energy costs for pressurizing water are not required compared to filtration by reverse osmosis using the RO membrane. Therefore, an ion concentration of water can be adjusted at a low cost by an extremely simple method.

According to the above-described example, the electrode 14 is configured to apply a negative voltage to the conductive filter 11. Therefore, cations such as metal ions are collected by the conductive filter 11. Therefore, hardness components (metal ions such as calcium ions or magnesium ions) or radioactive substances (for example, radioactive cesium, radioactive strontium, or the like) contained in water can be removed.

According to the above-described example, a voltage is applied to the conductive filter 11 via the electrode 14 that functions as a working electrode, and it is configured such that a current does not flow in the circuit due to the insulator 13. Therefore, power consumption can be suppressed.

In the above-described example, when the conductive filters 11 and 12, the insulator 13, and the electrodes 14 and 15 constituting the filter member 10 each have a plate shape (for example, a disc shape), these are in uniform contact with each other, and thus a voltage can be applied without deviation.

### Modified example

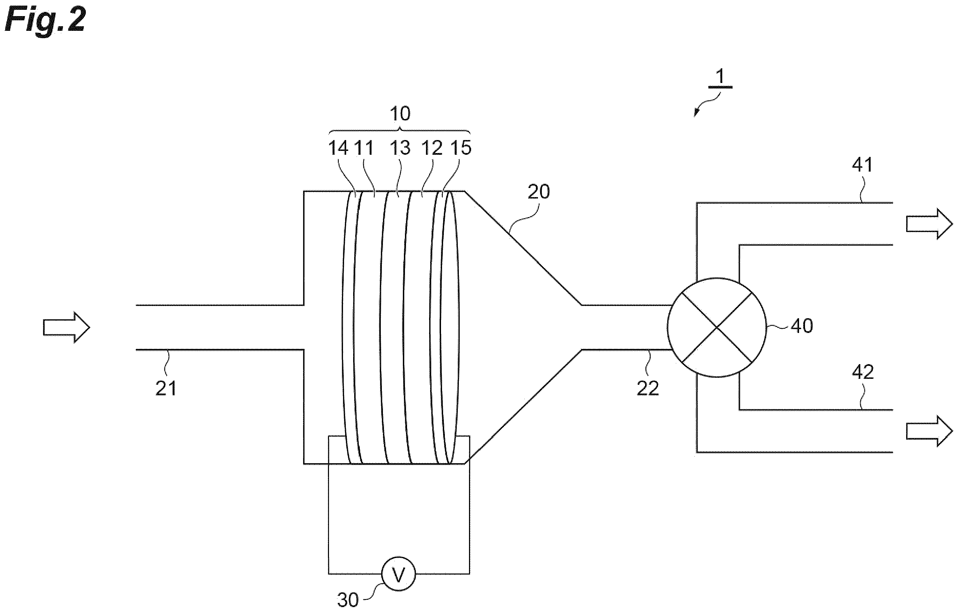

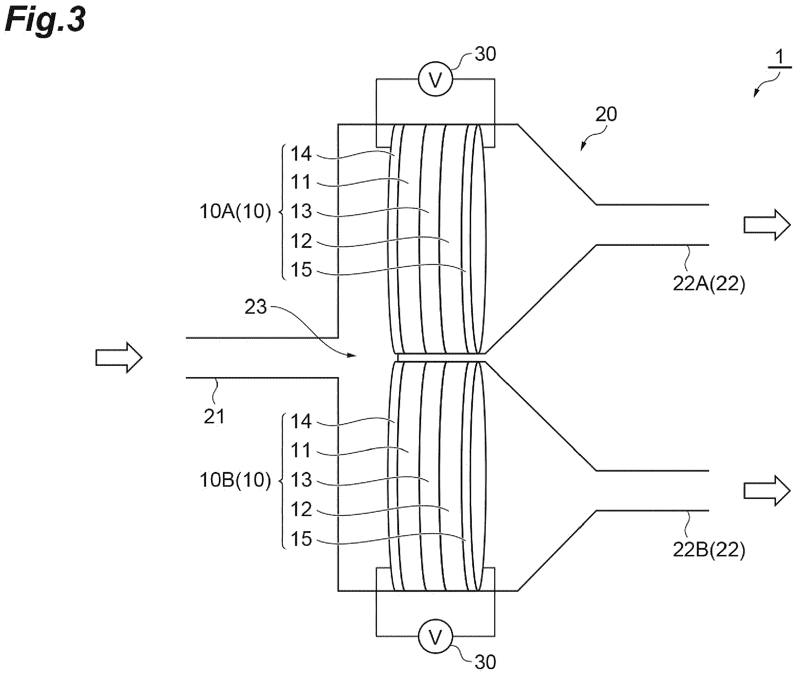

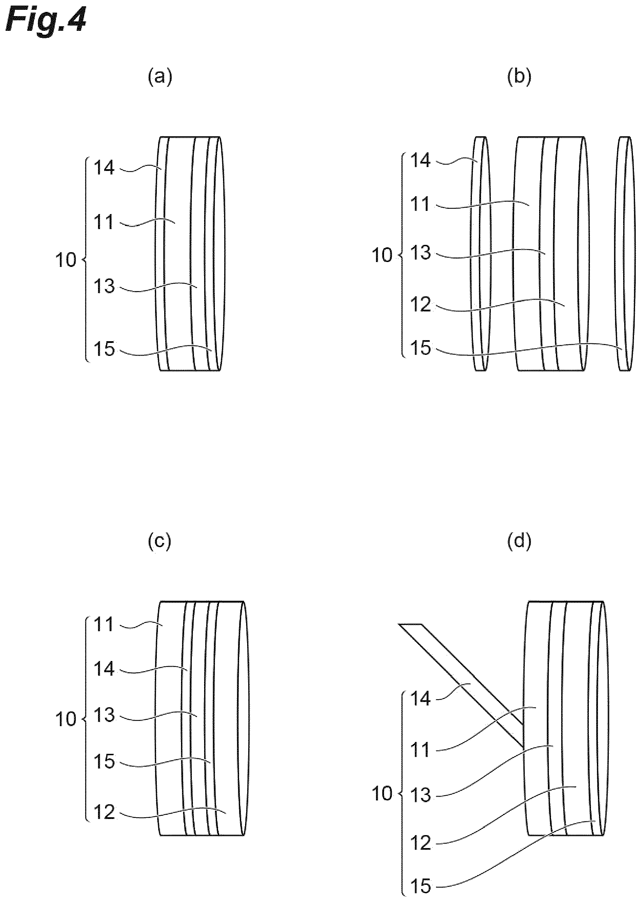

It should be considered that the disclosure in the present specification is illustrative only in all respects and is not restrictive. Various omissions, substitutions, changes, or the like may be made to the above example within the scope not departing from the claims and the gist thereof.
(1) As illustrated in FIG. 2, the water treatment device 1 may further include a drive valve 40 and discharge flow paths 41 and 42. The drive valve 40 fluidly connects the outlet 22 to the discharge flow paths 41 and 42. Specifically, the drive valve 40 is configured to operate to be switchable between a first state in which the outlet 22 communicates with the discharge flow path 41 (first discharge flow path) while the outlet 22 does not communicate with the discharge flow path 42 (second discharge flow path) and a second state in which the outlet 22 communicates with the discharge flow path 42 while the outlet 22 does not communicate with the discharge flow path 41. The drive valve 40 may also be, for example, a three-way solenoid valve.
   The switching between the first state and the second state in the drive valve 40 may be controlled to be interlocked with a change in the voltage applied to the conductive filters 11 and 12. For example, the drive valve 40 may be controlled to be in the first state when a negative voltage is applied to the conductive filter 11, and the drive valve 40 may be controlled to be in the second state when no voltage is applied to the conductive filters 11 and 12 or when a positive voltage is applied to the conductive filter 11. In this way, when the drive valve 40 operates according to whether or not a voltage is applied to the conductive filters 11 and 12, water from which cations have been removed is discharged from the discharge flow path 41, and water in which cations have been concentrated is discharged from the discharge flow path 42. Therefore, low-concentration water having a low cation concentration (for example, soft water) and high-concentration water having a high cation concentration (for example, hard water) can be manufactured to be automatically separated into the discharge flow path 41 and the discharge flow path 42.
   On/off control of the power supply 30 and the switching control of the first and second states by the drive valve 40 may not necessarily be performed at the same time. For example, the switching control of the first and second states by the drive valve 40 may be performed after a predetermined time has elapsed from the on/off control of the power supply 30.
   A tank capable of temporarily storing the high-concentration water (hard water) discharged from the discharge flow path 42 may be connected to a downstream end of the discharge flow path 42. Other devices that use the high-concentration water (hard water) may be connected to the downstream end of the discharge flow path 42.
(2) As illustrated in FIG. 3, the holder 20 may include a branch part 23 whose outlet side branches into two forks, and two filter members 10 may be disposed in the holder 20. Hereinafter, for convenience, one of outlets 22 of the holder 20 will be referred to as "outlet 22A" (first outlet), the other of the outlets 22 of the holder 20 will be referred to as "outlet 22B" (second outlet), the filter member 10 disposed between the branch part 23 and the outlet 22A will be referred to as "filter member 10A" (first filter member), and the filter member 10 disposed between the branch part 23 and the outlet 22B will be referred to as "filter member 10B" (second filter member). That is, the filter member 10A includes the pair of conductive filters 11 and 12, the insulator 13 (first insulator), and the pair of electrodes 14 and 15 (a pair of first electrodes). Similarly, the filter member 10B includes the pair of conductive filters 11 and 12, the insulator 13 (second insulator), and the pair of electrodes 14 and 15 (a pair of second electrodes).
   In the filter member 10A, a negative voltage is applied to the conductive filter 11 by the power supply 30 via the electrode 14 (working electrode) on the upstream side, and the electrode 15 (counter electrode) is disposed on the downstream side (outlet 22A side). Therefore, when an ionic solution supplied from the inlet 21 reaches the filter member 10A, cations are attracted to the electrode 14 and permeable holes in the conductive filter 11 of the filter member 10A and do not easily permeate through the conductive filter 11 of the filter member 10A, and anions permeate through the filter member 10A without reacting with the permeable holes in the conductive filter 11 of the filter member 10A.
   On the other hand, in the filter member 10B, a positive voltage is applied to the conductive filter 11 by the power supply 30 via the electrode 14 (counter electrode) on the upstream side, and the electrode 15 (working electrode) is disposed on the downstream side (outlet 22B side). Therefore, when the ionic solution supplied from the inlet 21 reaches the filter member 10B, anions are attracted to the electrode 14 and permeable holes in the conductive filter 11 of the filter member 10B and do not easily permeate through the conductive filter 11 of the filter member 10B, and cations permeate through the filter member 10B without reacting with the permeable holes in the conductive filter 11 of the filter member 10B.
   In the water treatment device 1 illustrated in FIG. 3, water from which cations have been removed is discharged from the outlet 22A, and water in which cations are concentrated is discharged from the outlet 22B. Therefore, low-concentration water having a low cation concentration (for example, soft water) and high-concentration water having a high cation concentration (for example, hard water) can be more efficiently manufactured to be separated into the outlets 22A and 22B without using a control element such as the drive valve 40.
(3) The filter member 10 may take various forms. For example, as illustrated in FIG. 4(a), the filter member 10 may not include the conductive filter 12. In this case, the insulator 13 may be sandwiched between the conductive filter 11 and the electrode 15 or may be sandwiched between the conductive filter 11 and another member. Alternatively, the filter member 10 may not include the conductive filter 11. In this case, the insulator 13 may be sandwiched between the electrode 14 and the conductive filter 12 or may be sandwiched between another member and the conductive filter 12.
   As illustrated in FIG. 4(b), the electrode 14 may be disposed to be spaced apart from the conductive filter 11 and/or the insulator 13. In this case, the electrode 14 may be electrically connected to the conductive filter 11 via a liquid. Similarly, the electrode 15 may be disposed to be spaced apart from the insulator 13 and/or the conductive filter 12. In this case, the electrode 15 may be electrically connected to the conductive filter 12 via a liquid.
   As illustrated in FIG. 4(c), the electrode 14 may be disposed between the conductive filter 11 and the insulator 13. Alternatively, the electrode 15 may be disposed between the conductive filter 12 and the insulator 13.
   As illustrated in FIG. 4(d), the electrode 14 may be a rod-shaped body. In this case, a distal end of the electrode 14 may be in contact with an outer surface of the conductive filter 11. Alternatively, the electrode 15 may be a rod-shaped body. In this case, a distal end of the electrode 15 may be in contact with an outer surface of the conductive filter 12.
   The filter member 10 may include at least one conductive filter. The filter member 10 may include at least a pair of electrodes. The filter member 10 may include at least one insulator 13.
   In the filter member 10, the conductive filter 11 itself may be used as an electrode (working electrode or counter electrode) instead of the electrode 14. In the filter member 10, the conductive filter 12 itself may be used as an electrode (counter electrode or working electrode) instead of the electrode 15.
   One filter member 10 may be formed by partially combining the above-described various modified examples.
(4) The filter member 10 may be manufactured by, for example, the following method. First, a dispersion liquid of single-walled carbon nanotubes ("EC2.0" manufactured by Meijo Nano Carbon Co., Ltd.) generated by a DIPS method is spray-coated on one main surface of a polycarbonate membrane filter ("Isopore" manufactured by Merck Co., Ltd.) that functions as the insulator 13 and dried at 100°C. Next, in the same manner, the dispersion liquid of the single-walled carbon nanotubes ("EC2.0" manufactured by Meijo Nano Carbon Co., Ltd.) generated by a DIPS method is spray-coated also on the other main surface of the membrane filter and dried at 100°C. Next, when the membrane filter is baked at 200°C for 5 minutes, a circular carbon filter functioning as the conductive filters 11 and 12 is formed on each surface of the membrane filter. In the carbon filter, gaps between the carbon nanotubes function as water-permeable holes. Next, the conductive filters 11 and 12 are sandwiched from the outside by a pair of platinum mesh electrodes that function as the electrodes 14 and 15 and have a circular shape. At this time, the platinum mesh electrode in contact with the conductive filter 11 from the upstream side functions as a working electrode, and the platinum mesh electrode in contact with the conductive filter 12 from the downstream side functions as a counter electrode.
   Alternatively, the filter member 10 may be manufactured by, for example, the following method. First, a dispersion liquid of the single-walled carbon nanotubes ("EC2.0" manufactured by Meijo Nano Carbon Co., Ltd.) is applied to both sides of the polycarbonate membrane filter ("Isopore" manufactured by Merck Co., Ltd.) that functions as the insulator 13 using a bar coater and dried. Thereby, a circular carbon filter that functions as the conductive filters 11 and 12 is formed on each surface of the membrane filter. Also in the carbon filter, gaps between the carbon nanotubes function as water-permeable holes. Next, the conductive filters 11 and 12 are sandwiched from the outside by a platinum mesh electrode that functions as the electrode 14 and has a circular shape and a carbon paper that functions as the electrode 15 and has a circular shape. At this time, the platinum mesh electrode in contact with the conductive filter 11 from the upstream side functions as a working electrode, and the carbon paper in contact with the conductive filter 12 from the downstream side functions as a counter electrode.
(5) The power supply 30 may be controlled to apply a voltage to the electrodes 14 and 15 and the conductive filters 11 and 12 such that the electrode 14 and the conductive filter 11 on the upstream side serve as an anode and the electrode 15 and the conductive filter 12 on the downstream side serve as a cathode. In this case, anions (silica ions or the like) in water are attracted to the anode and do not easily permeate through the conductive filter 11, and thereby water having a low anion concentration can be obtained.
(6) A plurality of water treatment devices 1 may be aligned in series to form multiple stages. In this case, an ion removal performance can be improved with a simple configuration.

### Other examples

Example 1. A water treatment device according to one example of the present disclosure includes a tubular member configured to allow water to flow between an inlet on one end side and an outlet on the other end side, and a filter member disposed in the tubular member between the inlet and the outlet. The filter member includes a conductive filter having permeable holes through which water can flow, a pair of electrodes configured to apply a voltage to the conductive filter, and an insulator disposed between the pair of electrodes and configured to insulate between the pair of electrodes. In this case, since an attractive or a repulsive force (electrostatic force) acts on ions due to an electric charge, an ion concentration in water can be adjusted extremely easily. Moreover, since sizes of the permeable holes are generally much larger than those of hydrates of metal ions, costs for replacing an RO membrane or energy costs for pressurizing water are not required compared to filtration by reverse osmosis using the RO membrane. Therefore, an ion concentration of water can be adjusted at a low cost by a simple method.
Example 2. In the device of Example 1, the filter member may further include another conductive filter having permeable holes through which water can flow, the conductive filter and the other conductive filter may sandwich the insulator so that the insulator is positioned between the conductive filter and the other conductive filter, and the pair of electrodes may sandwich the conductive filter and the other conductive filter so that the conductive filter, the insulator, and the other conductive filter are positioned between the pair of electrodes.
Example 3. In the device of Example 1 or Example 2, the pair of electrodes may be configured to apply a negative voltage to the conductive filter. In this case, since cations such as metal ions are collected by the conductive filter, hardness components (metal ions such as calcium ions or magnesium ions) and radioactive substances (for example, radioactive cesium, radioactive strontium, or the like) contained in water can be removed.
Example 4. The device of Example 3 may further include first and second discharge flow paths connected to the outlet via a drive valve, the drive valve may be configured to allow the outlet to communicate with the first discharge flow path when the pair of electrodes apply a negative voltage to the conductive filter, and the drive valve may be configured to allow the outlet to communicate with the second discharge flow path when the pair of electrodes do not apply a voltage to the conductive filter or the pair of electrodes apply a positive voltage to the conductive filter. In this case, the drive valve operates according to whether or not a voltage is applied to the conductive filter. Therefore, water from which cations have been removed is discharged from the first discharge flow path, and water in which cations have been concentrated is discharged from the second discharge flow path. Therefore, low-concentration water having a low cation concentration (for example, soft water) and high-concentration water having a high cation concentration (for example, hard water) can be manufactured to be automatically separated into the discharge flow path and the discharge flow path.
Example 5. In the device of Example 1, the outlet may include first and second outlets, the tubular member may include a branch part at which the inlet branches into the first and second outlets, the filter member may include a first filter member disposed in the tubular member between the branch part and the first outlet, and a second filter member disposed in the tubular member between the branch part and the second outlet, the first filter member may include a first conductive filter having permeable holes through which water can flow, a pair of first electrodes configured to apply a negative voltage to the first conductive filter, and a first insulator disposed between the pair of first electrodes and configured to insulate between the pair of first electrodes, and the second filter member may include a second conductive filter having permeable holes through which water can flow, a pair of second electrodes configured to apply a positive voltage to the second conductive filter, and a second insulator disposed between the pair of second electrodes and configured to insulate between the pair of second electrodes. In this case, since cations contained in water supplied to the first filter member are collected by the first conductive filter, the water that has permeated through the first filter member mainly contains anions. On the other hand, since anions contained in water supplied to the second filter member are collected by the second conductive filter, the water that has permeated through the second filter member mainly contains cations. Therefore, low-concentration water having a low cation concentration (for example, soft water) and high-concentration water having a high cation concentration (for example, hard water) can be more efficiently manufactured to be separated into the first outlet and the second outlet without using other control elements.
Example 6. A method of manufacturing an ion-concentration-adjusted water according to another example of the present disclosure is an ion-concentration-adjusted water manufacturing method by using a water treatment device which includes a tubular member configured to allow water to flow between an inlet on one end side and an outlet on the other end side, and a filter member disposed in the tubular member between the inlet and the outlet, in which the filter member includes a conductive filter having permeable holes through which water can flow, a pair of electrodes, and an insulator disposed between the pair of electrodes and configured to insulate between the pair of electrodes. The method of Example 6 includes applying a voltage to the conductive filter with the pair of electrodes, and supplying water to the filter member by causing the water to flow from the inlet to the outlet with the voltage applied to the conductive filter. In this case, the same operation and effects as those of the device of Example 1 are achieved.
Example 7. In the method of Example 6, applying the voltage to the conductive filter with the pair of electrodes may include applying a negative voltage to the conductive filter with the pair of electrodes. In this case, the same operation and effects as those of the device of Example 3 are achieved.
Example 8. The method of Example 7 may further include discharging water remaining in the tubular member from the inside of the tubular member by stopping application of the voltage to the conductive filter with the pair of electrodes or applying a positive voltage to the conductive filter with the pair of electrodes after supplying water to the filter member. In this case, the same operation and effects as those of the device of Example 4 are achieved.

### Reference Signs List

1: Water treatment device
10: Filter member
10A: Filter member (first filter member)
10B: Filter member (second filter member)
11, 12: Conductive filter (another conductive filter, first conductive filter, second conductive filter)
13: Insulator (first insulator, second insulator)
14, 15: Electrode (first electrode, second electrode)
20: Holder (tubular member)
21: Inlet
22: Outlet
22A: Outlet (first outlet)
22B: Outlet (second outlet)
23: Branch part
30: Power supply
40: Drive valve
41: Discharge flow path (first discharge flow path)
42: Discharge flow path (second discharge flow path)

## Claims

1. A water treatment device comprising:
a tubular member configured to allow water to flow between an inlet on one end side and an outlet on the other end side; and
a filter member disposed in the tubular member between the inlet and the outlet,
wherein the filter member includes:
a conductive filter having permeable holes through which water is able to flow;
a pair of electrodes configured to apply a voltage to the conductive filter; and
an insulator disposed between the pair of electrodes and configured to insulate between the pair of electrodes.

2. The device according to claim 1,
wherein the filter member further includes another conductive filter having permeable holes through which water is able to flow,
wherein the conductive filter and the other conductive filter sandwich the insulator so that the insulator is positioned between the conductive filter and the other conductive filter, and
wherein the pair of electrodes sandwich the conductive filter and the other conductive filter so that the conductive filter, the insulator, and the other conductive filter are positioned between the pair of electrodes.

3. The device according to claim 1 or 2, wherein the pair of electrodes are configured to apply a negative voltage to the conductive filter.

4. The device according to claim 3, further comprising first and second discharge flow paths connected to the outlet via a drive valve,
wherein the drive valve is configured to allow the outlet to communicate with the first discharge flow path when the pair of electrodes apply a negative voltage to the conductive filter, and
wherein the drive valve is configured to allow the outlet to communicate with the second discharge flow path when the pair of electrodes do not apply a voltage to the conductive filter or the pair of electrodes apply a positive voltage to the conductive filter.

5. The device according to claim 1,
wherein the outlet includes first and second outlets,
wherein the tubular member includes a branch part at which the inlet branches into the first and second outlets,
wherein the filter member includes:
a first filter member disposed in the tubular member between the branch part and the first outlet; and
a second filter member disposed in the tubular member between the branch part and the second outlet,
wherein the first filter member includes:
a first conductive filter having permeable holes through which water is able to flow;
a pair of first electrodes configured to apply a negative voltage to the first conductive filter; and
a first insulator disposed between the pair of first electrodes and configured to insulate between the pair of first electrodes, and
wherein the second filter member includes:
a second conductive filter having permeable holes through which water is able to flow;
a pair of second electrodes configured to apply a positive voltage to the second conductive filter; and
a second insulator disposed between the pair of second electrodes and configured to insulate between the pair of second electrodes.

6. A method of manufacturing an ion-concentration-adjusted water by using a water treatment device which includes a tubular member configured to allow water to flow between an inlet on one end side and an outlet on the other end side, and a filter member disposed in the tubular member between the inlet and the outlet, in which the filter member includes a conductive filter having permeable holes through which water is able to flow, a pair of electrodes, and an insulator disposed between the pair of electrodes and configured to insulate between the pair of electrodes, the method comprising:
applying a voltage to the conductive filter with the pair of electrodes; and
supplying water to the filter member by causing the water to flow from the inlet to the outlet with the voltage applied to the conductive filter.

7. The method according to claim 6, wherein applying the voltage to the conductive filter with the pair of electrodes includes applying a negative voltage to the conductive filter with the pair of electrodes.

8. The method according to claim 7, further comprising discharging water remaining in the tubular member from the inside of the tubular member by stopping application of the voltage to the conductive filter with the pair of electrodes or applying a positive voltage to the conductive filter with the pair of electrodes after supplying water to the filter member.
